Europäisches Patentamt

European Patent Office

Office européen des brevets

(11) Veröffentlichungsnummer: **0 462 527 A1**

# (12) EUROPÄISCHE PATENTANMELDUNG

(21) Anmeldenummer: **91109825.9**

(51) Int. Cl.5: **E03F 3/06**, F16L 55/16

(22) Anmeldetag: **15.06.91**

(30) Priorität: **21.06.90 DE 4019769**

(43) Veröffentlichungstag der Anmeldung:
**27.12.91 Patentblatt 91/52**

(84) Benannte Vertragsstaaten:
**AT BE CH DE ES FR GB IT LI LU NL SE**

(71) Anmelder: **Hermann Hemscheidt
Maschinenfabrik GmbH & Co.
Bornberg 97-103
W-5600 Wuppertal 1(DE)**

(72) Erfinder: **Behnert, Holger
Schwartnerstrasse 1c**

**W-5600 Wuppertal 2(DE)**
Erfinder: **Peschel, Walter, Ing. (grad.)**
**Kruppstrasse 222**
**W-5600 Wuppertal 1(DE)**
Erfinder: **Heinz, Norbert, Dipl.-Ing.**
**Königstrasse 118**
**W-5630 Remscheid(DE)**
Erfinder: **Bollin, Klaus-Peter, Ing.**
**Emil-von-Behring-Strasse 3**
**W-2222 Marne(DE)**
Erfinder: **Koschnik, Horst**
**Jahnstrasse 1**
**W-2227 Süderhastedt(DE)**

(54) **Verfahren zum Einbringen und Ausrichten der Anschlussrohre eines Inliners in eine Kanalrohrleitung und Vorrichtung zur Durchführung des Verfahrens.**

(57) In eine Kanalrohrleitung 1 mit seitlich einmündenden Zulaufleitungen 4 wird ein aus Kurzrohren 5 und Anschlußrohren 6 zusammengesetzter Inliner-Rohrstrang eingebracht. Die Anschlußrohre werden bereits beim Einbringen in die Kanalrohrleitung 1 passend zu den Abständen der Zulaufleitungen 4 zusammengefügt, so daß die Anschlußöffnungen 7 nach dem Einschieben des Inliner-Rohrstrangs in die Kanalrohrleitung 1 passend zu den Zulaufleitungen 4 liegen. Anschließend werden die Anschlußrohre 6 mit einer in den Rohrstrang eingefahrenen Vorrichtung gedreht und auf die Mündungen der Zulaufleitungen 4 ausgerichtet.

Fig. 2

Die Erfindung betrifft ein Verfahren zum Einbringen und Ausrichten der mit Anschlußöffnungen versehenen Anschlußrohre eines aus Kurzrohren und Paßstücken zusammengesetzten Inliners für eine zwischen zwei Kanalschächten verlegte Kanalrohrleitung, in welche seitliche Zulaufleitungen einmünden, welche über die Anschlußöffnungen in den Anschlußrohren mit dem Inliner verbunden werden und eine Vorrichtung zur Durchführung des Verfahrens.

Beschädigte Kanalrohrleitungen können durch das Einbringen eines Inliner-Rohrstranges saniert werden, der beispielsweise aus Kurzrohren zusammengesetzt ist. Das Einbringen der Rohre geschieht abschnittsweise in jeweils einer Kanalhaltung zwischen zwei von der Oberfläche zu der Kanalrohrleitung hinunterführenden Kanalschächten. Vor dem Einziehen der Inliner-Rohre wird die Kanalhaltung gereinigt und von Unebenheiten, z.B. Wurzeleinwüchsen, befreit. Ein mit Hilfe einer Fernsehkamera erstelltes Meßprotokoll von der Kanalhaltung gibt genaue Auskunft über die Lage der seitlich in die Kanalrohrleitung einmündenden Zulaufleitungen, an die anliegende Häuser oder Straßeneinläufe angeschlossen sind. Für den Einbau von Inliner-Rohren in Kanalrohrleitungen mit nicht begehbaren Querschnitten sind verschiedene Verfahren und Vorrichtungen bekannt.

Die DE 38 35 186 C1 offenbart ein Verfahren, mit dem die Kurzrohre auf einem in der Kanalrohrleitung verfahrbaren Transportschlitten einzeln eingebracht und an der Einbaustelle einem in dem bereits zusammengestzten Rohrstrang verfahrbaren Richtwagen übergeben werden, der die Rohre mit einem in der Rohrachse ausgerichteten Ausleger übernimmt und in die vorgegebene Einbaulage bringt. Der Transport der einzelnen Kurzrohre im Pendelverkehr auf einem Schlitten ist jedoch sehr zeitaufwendig. Als weiterer Nachteil kommt hinzu, daß der für den Inliner zur Verfügung stehende Rohrquerschnitt durch den auf Kufen geführten Schlitten zusätzlich verkleinert wird.

Der Erfindung liegt die Aufgabe zugrunde, ein Verfahren der eingangs genannten Gattung anzugeben, mit dem die Einbauzeiten verkürzt und der offene Querschnitt der Kanalrohrleitung nahezu vollständig für die einzubringenden Rohre des Inliners genutzt werden kann sowie eine hierzu geeignete Vorrichtung zu schaffen.

Diese Aufgabe wird durch ein Verfahren mit den im Anspruch 1 angegebenen Merkmalen sowie eine Vorrichtung mit den im Anspruch 2 genannten Merkmalen gelöst. Die Unteransprüche 3 bis 6 betreffen zweckmäßige Ausgestaltungen der Vorrichtung.

Nach dem erfindungsgemäß vorgeschlagenen Verfahren werden vorgefertigte Anschlußrohre mit den seitlich in die Rohrwandung eingeschnittenen Anschlußöffnungen für die Zulaufleitungen nach einem zuvor festgelegten Einbauplan maßgenau in den Rohrstrang eingefügt, der auf der Schachtsohle zusammengesteckt und mit Hilfe einer Seilwinde oder einer mit Druckzylindern versehenen Schubvorrichtung in die Kanalrohrleitung eingebracht wird. Da die Abstände der einzelnen Zulaufleitungen zu einem zuvor festgelegten Bezugspunkt am Schacht genau vermessen sind, können die Anschlußrohre mit den Anschlußöffnungen genau im erforderlichen Abstand voneinander positioniert werden. Das Zusammenstecken und Einziehen der Rohre erfolgt zügig, ohne daß einzelne Rohre an Vorsprüngen innerhalb der Kanalrohrleitung verkanten.

In einem weiteren Verfahrensgang werden die in der Längsrichtung maßgenau zu den Zulaufleitungen eingezogenen Anschlußrohre mit den Anschlußöffnungen auf die mit unterschiedlichem Einlaufwinkel eintretenden Zulaufleitungen ausgerichtet. Dazu wird eine Vorrichtung in den Inliner-Rohrstrang eingefahren und mit Spannelementen jeweils beiderseits eines Anschlußrohres im Rohrstrang verspannt. Die Vorrichtung besitzt einen radial gerichteten Mitnehmer, der an der Drehachse eines Stellmotors befestigt und um die Längsachse des Rohrstranges schwenkbar ist. Der Mitnehmer wird in die Anschlußöffnung eingeführt und am Rand der Anschlußöffnung zur Anlage gebracht. Im Blickfeld der eingebauten Fernsehkamera wird das Anschlußrohr von dem Mitnehmer gegenüber den benachbarten Rohren gedreht und mit der Anschlußöffnung genau auf die in die Kanalrohrleitung einmündende Zulaufleitung ausgerichtet. Das Ausrichten einer Anschlußöffnung mit der erfindungsgemäßen Drehvorrichtung beansprucht wenig Zeit, zumal der Vorgang mit Hilfe der Fernsehkamera gut beobachtet werden kann. Auf diese Weise werden die einzelnen Anschlußrohre einer Kanalhaltung zügig nacheinander ausgerichtet. Anschließend werden mit einer weiteren Vorrichtung Anschlußstücke gesetzt, die das Anschlußrohr mit der Zulaufleitung im Übergangsbereich der Anschlußöffnung abdichtend verbinden. Das erfindungsgemäße Verfahren nutzt den zur Verfügung stehenden offenen Querschnitt in der Kanalrohrleitung in optimaler Weise für den Inliner, so daß die Sanierung von undichten Kanalrohrleitungen vor allem bei geringen Querschnittsweiten im nicht begehbaren Bereich ohne wesentliche Verengung der Durchflußquerschnitte möglich wird.

Ein Ausführungsbeispiel der Erfindung wird nachfolgend anhand eines in der Zeichnung dargestellten Ausführungsbeispiels näher erläutert. Es zeigen:

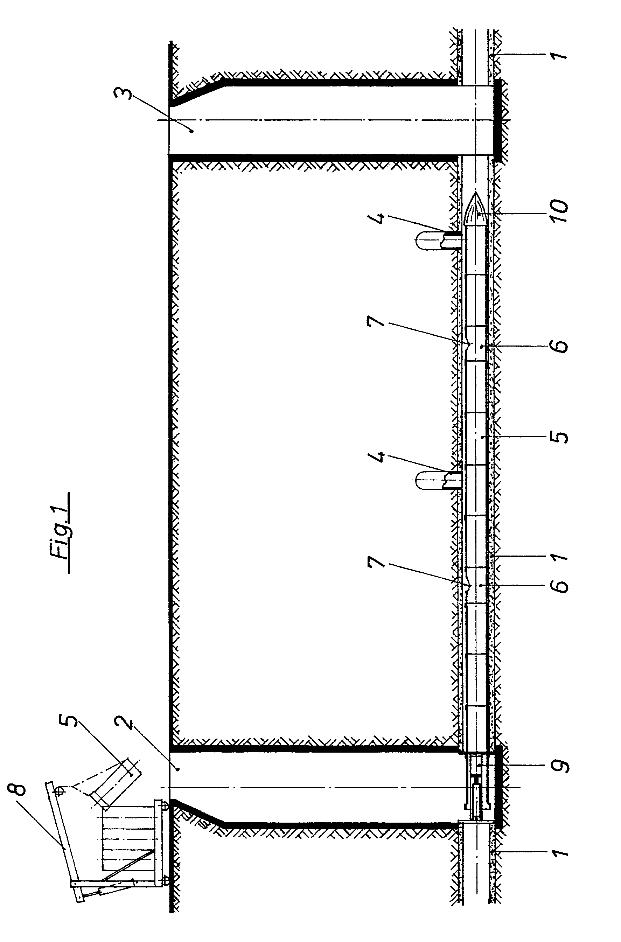

Fig. 1      eine im Längsschnitt schematisch dargestellte Kanalhaltung von einer im Erdreich verlegten Kanalrohrleitung;

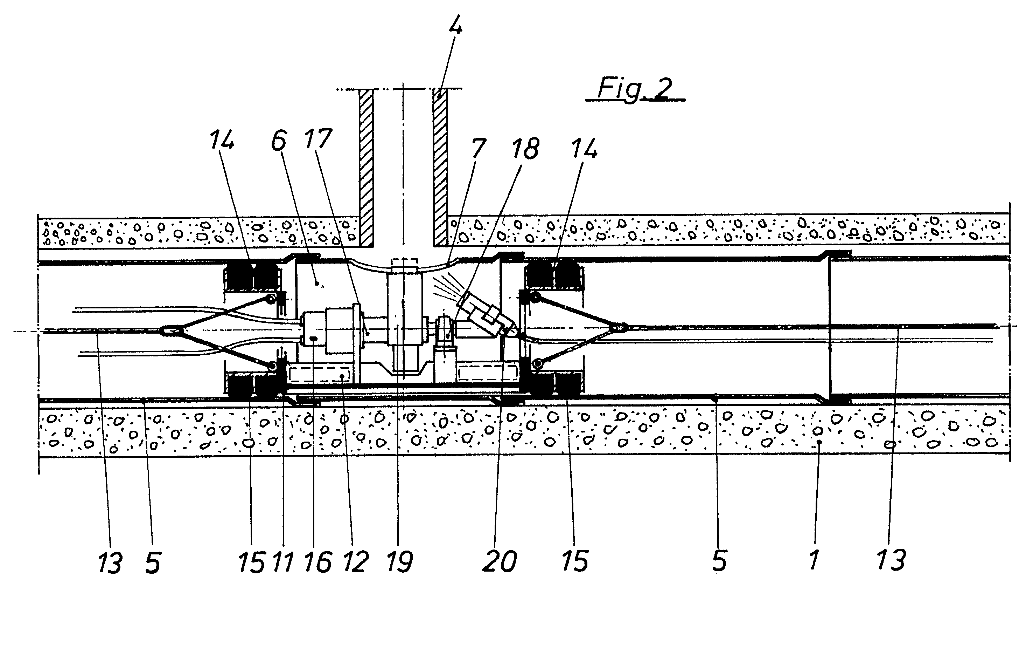

Fig. 2    die Kanalrohrleitung mit eingezognem Inliner und einer Drehvorrichtung im Bereich einer Zulaufleitung in vergrößertem Maßstab.

In der Kanalhaltung ist die Kanalrohrleitung 1 durch zwei beispielsweise im Abstand von 50 m voneinander entfernte Kanalschächte 2 und 3 mit der Oberfläche verbunden. An verschiedenen Stellen münden Zulaufleitungen 4 mit unterschiedlichen Einlaufwinkeln seitlich in die Kanalrohrleitung 1 ein.

In die Kanalrohrleitung 1 wird ein Inliner eingezogen, der aus einzelnen Kurzrohren 5 Anschlußrohren 6 und Paßstücken - in der Zeichnung nicht dargestellt - zusammengestzt ist. In der Rohrwandung jedes Anschlußrohres 6 befindet sich eine Anschlußöffnung 7 für die Verbindung des einzubringenden Inliners mit den einzelnen Zulaufleitungen 4. Die Anschlußrohre 6 haben eine einheitliche Baulänge, die kürzer bemessen ist als die der Kurzrohre 5. Der Querschnitt der Anschlußöffnungen 7 kann größer bemessen sein als der Öffnungsquerschnitt der jeweiligen

Zulaufleitung 4.

Die Rohre 5, 6 werden nacheinander mit einem Hubgerät 8 in den Einstiegsschacht 1 hintergelassen und auf der Schachtsohle nach einem Einbauplan in vorgegebener Reihenfolge zu einem Rohrstrang zusammengesteckt. Dieser wird mit einer hydraulischen Schubvorrichtung 9 in die Kanalrohrleitung 1 eingeschoben. Der Einschub erfolgt exakt in der Weise, daß die Anschlußöffnungen 7 der jeweiligen Anschlußrohre 6 mit der Lage der jeweiligen Zulaufleitungen 4 in der Längsrichtung der Kanalrohrleitung 1 übereinstimmen. Die Anschlußöffnungen 7 sind dann aber noch nicht auf die mit sehr unterschiedlichen Einlaufwinkeln in die Kanalrohrleitung 1 einmündenden Zulaufleitungen 4 ausgerichtet, wozu ein weiterer Verfahrensschritt notwendig ist.

Nach dem Einziehen des Rohrstranges 5, 6 werden die Anschlußrohre 6 mit den Anschlußöffnungen 7 auf die Mündungen der Zulaufleitungen 4 ausgerichtet, indem sie gegenüber den benachbarten Kurzrohren 5 um ihre Längsachse gedreht werden. Dies geschieht erfindungsgemäß mit einer Vorrichtung, die einen wannenförmig ausgebildeten Schlitten 11 aufweist, der auf Kufen 12 gelagert ist und von einem Seilzug 13 gezogen innerhalb des Inliner-Rohrstrangs 5, 6 verfahrbar ist. Der Schlitten 11 besitzt an beiden Stirnseiten felgenförmige Halterungen 14 für dehnbare Spannringe 15, die über ein zugeführtes Druckmittel gespannt und gegen die Innenwandung der Inliner-Rohre 5 gedrückt werden. Der Abstand der stirnseitigen Spannelemente 14, 15 voneinander ist größer als die Baulänge eines Anschlußrohres 6, damit sie jeweils beiderseits eines Anschlußrohres 6 an den benachbarten Kurzrohren 5 verspannt werden können. Auf dem Schlitten 11 befindet sich ein Stellmotor 16 mit einer sich in Längsachse des Inliner-Rohrstranges 5, 6 erstreckenden Drehachse 17, die auf einem Lagerbock 18 abgestützt ist. An der Drehachse 17 ist ein radialgerichteter, teleskopartig verstellbarer Mitnehmer 19 befestigt, der als Schwenkarm in die Anschlußöffnung 7 des jeweiligen Anschlußrohres 6 einführbar ist und das Anschlußrohr 6 mit dem Stellmotor 16 um die eigene Achse gegenüber den benachbarten Kurzrohren 5 verdreht.

Mit einer ebenfalls auf dem Schlitten 11 montierten, ferngesteuerten schwenkbaren Fernsehkamera 20, die auf den Mitnehmer 19 gerichtet wird, kann die Drehbewegung des Anschlußrohres 6 gut beobachtet und somit die Anschlußöffnung 7 genau mit der Mündung der Zulaufleitung 4 zur Deckung gebracht und somit ausgerichtet werden.

**Patentansprüche**

1.    Verfahren zum Einbringen und Ausrichten der mit Anschlußöffnungen versehenen Anschlußrohre eines aus Kurzrohren und Paßstücken zusammengesetzten Inliners für eine zwischen zwei Kanalschächten verlegte Kanalrohrleitung, in welche seitliche Zulaufleitungen einmünden, welche über die Anschlußöffnungen in den Anschlußrohren mit dem Inliner verunden werden, dadurch gekennzeichnet, daß der aus Kurzrohren (5), Paßstücken und Anschlußrohren (6) gebildete Inliner-Rohrstrang auf der Sohle eines der beiden Kanalschächte (2,3) zusammengesteckt wird, wobei die vorgefertigten Anschlußrohre (6) mit den jeweils in die Rohrwandung eingeschniottenen Anschlußöffnungen (7) für die Zulaufleitungen (4) nach einem zuvor durch Vermessung der Abstände der Zulaufleitungen (4) von einem davor festgelegten Bezugspunkt am Schacht aufgestellten Einbauplan in der Längsrichtung maßgenau im vorgegebenen Abstand der Zulaufleitungen (4) in den Rohrstrang eingefügt werden, daß der Rohrstran mit Hilfe einer Schubvorrichtung (9) oder einer Zugvorrichtung (9) in die Kanalrohrleitung (1) eingeschoben oder eingezeogen wird, wobei die Anschlußöffnungen (7) der Anschlußrohre (6) mit den Mündungen der Zulaufleitungen (4) in Längsrichtung der Kanalrohrleitung (1) zur Deckung gebracht werden, und daß danach mittels einer im Inliner-Rohrstrang verfahrbaren Drehvorrichtung jedes Anschlußrohr (6) un seine Längsachse gegenüber den benachbarten Kurzrohren (5) gedreht und mit der Anschlußöffnung (7) auf die Mündung der jeweiligen Zulaufleitung (4) ausgerichtet wird.

2. Vorrichtung zur Durchführung der Drehung des Anschlußrohres beim Verfahren nach Anspruch 1, dadurch gekennzeichnet, daß sie einen im Inliner-Rohrstrang verfahrbaren und feststellbaren Schlitten (11) aufweist, der an seinen beiden Stirnseiten in einem Abstand voneinander, der größer ist als die Baulänge eines Anschlußrohres (6), gegen die Rohrinnenwandungen anpreßbare Spannelemente (14,15) aufweist, zwischen denen ein um die Längsachse des eingebauten Anschlußrohres (6) schwenkbarer Mitnehmer (19) angeordnet ist, der am Anschlußrohr (6) angreifen kann.

3. Vorrichtung nach Anspruch 2, dadurch gekennzeichnet, daß der Schlitten (11) als auf Kufen (12) geführte Wanne ausgebildet ist, an deren beiden Stirnseiten je eine felgenförmige Halterung (14) befestigt ist, in welcher Spannringe (15) aufgenommen sind.

4. Vorrichtung nach einem der Ansprüche 2 oder 3, dadurch gekennzeichnet, daß auf dem Schlitten (11) ein Stellmotor (16) mit einer sich in Längsachse des Inliner-Rohrstranges erstreckenden Drehachse (17) gelagert ist, mit der der Mitnehmer (19) verbunden ist.

5. Vorrichtung nach einem der Ansprüche 2 bis 4, dadurch gekennzeichnet, daß der Mitnehmer (19) als radialgerichteter, längenverstellbarer Schwenkarm ausgebildet und in die Anschlußöffnungen (7) der Anschlußrohre (6) einführbar ist.

6. Vorrichtung nach einem der Ansprüche 2 bis 5, dadurch gekennzeichnet, daß auf dem Schlitten (11) eine verschwenkbare Fernsehkamera (20) angeordnet ist, deren Objektiv auf den Mitnehmer (19) und auf die jeweilige Anschlußöffnung (7) im Anschlußrohr (6) einstellbar ist.

*Fig.1*

Fig 2

4

14

18

7

17

6

14

13

1

5

15

20

19

15 11 16 12

15

5

13

6

Europäisches
Patentamt

**EUROPÄISCHER
RECHERCHENBERICHT**

Nummer der Anmeldung

**EP 91 10 9825**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,A | EP-A-0 337 031   (OY WIIK & HÖGLUND AB)<br>* Spalte 2, Zeile 25 - Zeile 46; Abbildung 1 *<br>– – – | 1,6 | E 03 F 3/06<br>F 16 L 55/16 |
| Y,D,A,D | DE-C-3 835 186   (HERMANN HEMSCHEIDT & CO)<br>* das ganze Dokument *<br>– – – | 1,2-5 | |
| A | CA-A-1 164 816   (DURATON SYSTEMS LTD)<br>* Ansprüche 1-3 *<br>– – – | 1 | |
| A | EP-A-0 158 042   (WIIK & HÖGLUND GMBH)<br>* Seite 4, Zeile 11 - Zeile 22; Abbildung *<br>– – – | 1-6 | |
| A | EP-A-0 310 679   (ASHIMORI KOGYO KABUSHIKI KAISHA)<br>* Abbildung 1 *<br>– – – | 2-6 | |
| A | DE-A-3 605 233   (ZIMMER)<br>– – – – – | | |

| | |
|---|---|
| | **RECHERCHIERTE SACHGEBIETE (Int. Cl.5)**<br><br>E 03 F<br>F 16 L |

Der vorliegende Recherchenbericht wurde für alle Patentansprüche erstellt

| Recherchenort | Abschlußdatum der Recherche | Prüfer |
|---|---|---|
| Den Haag | 17 September 91 | VAN BEURDEN J.J.C.A. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus anderen Gründen angeführtes Dokument

&: Mitglied der gleichen Patentfamilie,
   übereinstimmendes Dokument